# EUROPÄISCHE PATENTSCHRIFT

(11) **EP 1 642 120 B1**
(45) Veröffentlichungstag und Bekanntmachung des Hinweises auf die Patenterteilung: **19.03.2008**
(21) Anmeldenummer: 04738777.4
(22) Anmeldetag: 24.06.2004
(51) Int. Cl.: G01N 30/60, B01L 3/00, C01B 31/02

(54) **MINIATURISIERTE ANREICHERUNGSVORRICHTUNG**
MINIATURIZED ENRICHMENT FACILITY
DISPOSITIF D'ENRICHISSEMENT MINIATURISE

(30) Priorität: 30.06.2003 DE 10329535
(43) Veröffentlichungstag der Anmeldung: 05.04.2006
(73) Patentinhaber: SLS Micro Technology GmbH, 21079 Hamburg (DE)
(72) Erfinder: MÜLLER, Jörg, 21244 Buchholz (DE); SUSSIEK, Martin, 22395 Hamburg (DE)
(74) Vertreter: Eisenführ, Speiser & Partner
(86) Internationale Anmeldenummer: PCT/DE2004/001328
(87) Internationale Veröffentlichungsnummer: WO 2005/001468

(56) Entgegenhaltungen:
- WO-A-02/079514
- WO-A-03/016901
- WO-A-20/04059298
- US-A1- 2003 119 034
- WILDING PETER ET AL: "Integrated cell isolation and polymerase chain reaction analysis using silicon microfilter chambers" ANALYTICAL BIOCHEMISTRY, ACADEMIC PRESS, SAN DIEGO, CA, US, Bd. 257, Nr. 2, 15. März 1998 (1998-03-15), Seiten 95-100, XP002188685 ISSN: 0003-2697

## Beschreibung

Die Erfindung betrifft eine miniaturisierte Vorrichtung zur Speicherung und/oder Anreicherung von Molekülen bzw. Atomen, insbesondere für einen Miniatur-Gaschromotographen, und ein Verfahren zur Herstellung einer solchen miniaturisierten Vorrichtung. Darüber hinaus betrifft sie auch die Verwendung nanoskaliger Partikel, Röhren und/oder Fasern zur Speicherung und/oder Anreicherung von Molekülen bzw. Atomen zu Analysezwecken.

Zur Absenkung der Nachweisgrenze von Analyse-Geräten, insbesondere für die Gasanalytik, wird häufig eine Probenanreicherung am Eingang des Analyse-Systems durchgeführt. Mit Hilfe einer solchen Probenanreicherung kann die Nachweisgrenze um zwei bis drei Größenordnungen herabgesetzt werden. Dies wird in der klassischen Analytik beispielsweise mit sogenannten "Tenax"-Röhrchen erzielt. Diese enthalten ein organisches Polymer als Adsorbens zur Anreicherung organischer Verbindungen. Auch andere Substanzen, z.B. Zeolithe, werden zu diesem Zweck eingesetzt. Die genannten Füllstoffe bestehen aus Partikeln mit einer stark porösen Oberflächentopologie. Dadurch weisen sie gegenüber Partikeln mit homogener Oberflächenstruktur eine stark vergrößerte spezifische Oberfläche (m²/g) auf und besitzen eine hohe Speicherkapazität für gasförmige Substanzen. Auf diese Weise wird die Adsorption von Gasmolekülen an Oberflächen für die Probenanreicherung nutzbar gemacht.

Die verfügbaren Röhrchen sind relativ voluminös und daher mit dem Gesamtkonzept eines miniaturisierten Analysesystems nicht vereinbar. Darüber hinaus ist das Einbringen der Adsorbenzien in solche Röhrchen mit den Verfahren der Mikrosystemtechnik nicht möglich.

Aus der US 6,004,450 ist ein Verfahren zur Herstellung einer porösen Siliziummembran in einem Siliziumsubstrat in Mikrosystemtechnik bekannt. Die poröse Siliziummembran kann zur Anreicherung von Probenmaterial herangezogen werden. Nachteilig an diesem Verfahren ist, daß es lediglich in dem verwendeten Substrat Silizium eine poröse Struktur erzeugt und daher keine Einstellung der Oberflächenenergie durch Wahl anderer Materialien oder Materialkombinationen ermöglicht. Des weiteren ist eine anschließende homogene Beschichtung der porösen Silizium-Strukturen, insbesondere in der vertikalen Orientierung, nicht möglich.

In der US 2003/0119034 ist eine miniaturisierte Trenn- bzw. Filtervorrichtung für Substanzen in einer Probe beschrieben, die aus einem Träger mit darauf angeordneten Kohlenstoff-Nanoröhren besteht. Die Trennung von Probenmolekülen erfolgt anhand der Abstände zwischen Kohlenstoff-Nanoröhren, wobei Probenmoleküle aufgrund ihrer Größe entweder zurückgehalten oder durchgelassen werden. Die US 2003/0119034 ist allerdings nicht ohne weiteres für die Gaschromatographie einsetzbar.

Aufgabe der vorliegenden Erfindung ist es, eine Vorrichtung zur Verfügung zu stellen, mit deren Hilfe eine wirksame Probenanreicherung bei miniaturisierten Analysengeräten, insbesondere Miniatur-Gaschromatographen, ermöglicht wird, die mit Verfahren der Mikrosystemtechnik leicht herstellbar ist, einen geringen Energiebedarf hat und die oben beschriebenen Nachteile des Standes der Technik nicht aufweist. Darüber hinaus ist es Aufgabe der vorliegenden Erfindung, ein Verfahren zur Herstellung einer solchen Vorrichtung zur Verfügung zu stellen.

Die erfindungsgemäße Lösung der Aufgabe erfolgt durch eine Vorrichtung mit den kennzeichnenden Merkmalen des Anspruchs 1 sowie ein Verfahren gemäß Anspruch 15.

Die erfindungsgemäße Vorrichtung zur Speicherung und/oder Anreicherung von Molekülen und/oder Atomen weist eine Kammer mit einem Füllmaterial auf, das aus Kohlenstoff-Nanoröhren und/oder Kohlenstoff-Nanofasern besteht oder diese enthält, wobei das Füllmaterial mit mindestens einer Schicht aus amorphem Kohlenstoff abgedeckt und dadurch die Kammer gebildet ist, und wobei die Kammer einen Eingang und einen Ausgang für die Zu- und Abfuhr einer Probe der Moleküle bzw. Atome aufweist.

Kohlenstoff-Nanoröhren (carbon nanotubes) sind als solche bekannt (s. bspw. H. Hoffschulz, 2000, "Anwendungsperspektiven von Kohlenstoff-Nanoröhren", Physikalische Blätter 56, 53-56). Es handelt sich hierbei um erst vor einigen Jahren entdeckte Kohlenstoffmodifikationen, die eine röhrenförmige Gestalt aufweisen. Kohlenstoff-Nanoröhren gehören zu den nanoskaligen bzw. nanokristallinen Feststoffen. Hierzu zählen auch die sogenannten Fullerene (z.B. das "Buckminster"-Fulleren aus 60 Kohlenstoffatomen), die im wesentlichen kugelförmige Kohlenstoffverbindungen darstellen. Diese Feststoffe zeichnen sich durch Abmessungen (z.B. Durchmesser) aus, die im Nanometerbereich (0,1 - 1000 nm) liegen. So weisen Kohlenstoff-Nanoröhren Durchmesser von beispielsweise 0,5 bis 100 nm auf. Hierbei kann zwischen einschichtigen (single wall nanotubes, SWNT) und mehrschichtigen (multi wall nanotubes, MWNT) Kohlenstoff-Nanoröhren unterschieden werden. SWNT können Durchmesser von beispielsweise 0,5-1,5 nm aufweisen, MWNT besitzen dagegen meist größere Durchmesser von beispielsweise 2-20 nm. Die Länge der Röhren kann dabei stark variieren. Längen von etwa 0,5 nm bis zu mehreren Mikrometern sind bislang erhältlich. Kohlenstoff-Nanofasern sind Stapel aus kleinen Graphitlagen, die ebenfalls eine hohe Speicherkapazität aufweisen.

Kohlenstoff-Nanoröhren lassen sich beispielsweise durch plasmagestützte chemische Abscheideverfahren (Plasma Enhanced Chemical Vapor Deposition, PECVD) herstellen. Die plasmagestützte Abscheidung von Kohlenstoff-Nanoröhren ist aus verschiedenen Veröffentlichungen bekannt (s. bspw. Z.F. Ren et al., 1998, "Synthesis of large arrays of well-aligned carbon nanotubes on glass", SIENCE 282, 1105-1107; M. Chhowalla et al., 2001, "Growth process conditions of vertically aligned carbon nanotubes using plasma enhanced chemical vapor deposition", Journal of Applied Physics 90, 5308-5317; US 2002/0004136 (US 6,361,861)). Die Veröffentlichungen, deren Offenbarung durch Inbezugnahme in die vorliegende Anmeldung aufgenommen wird, beschreiben die Abscheidung von vertikal ausgerichteten Nanoröhren auf Substraten wie Graphit, Glas und Silizium, wobei in der Regel Metall-Katalysatoren verwendet werden.

Das Füllmaterial ist mit mindestens einer Schicht aus amorphem Kohlenstoff abgedeckt. Auf diese Weise kann die Kammer in einfacher Weise gebildet werden. Die Wände der Kammer mit dem Füllmaterial werden bei dieser Ausführungsform von dem Träger und der Schicht aus amorphem Kohlenstoff gebildet. Die Schicht aus amorphem Kohlenstoff kann ebenfalls auf einfache Weise durch plasmagestützte chemische Gasphasenabscheidung (PECVD) gebildet werden.

Unter einem amorphen Material wird ein Stoff verstanden, bei dem die Atome keine geordneten Strukturen, sondern ganz unregelmäßige Muster bilden. Regelmäßig strukturierte Materialien werden dagegen als Kristalle bezeichnet. Die Schicht aus amorphem Kohlenstoff besteht daher aus Kohlenstoffatomen, die keine geordnete Struktur, wie z.B. die Kohlenstoff-Nanoröhren, ausbilden.

Die Kammer weist einen Eingang und einen Ausgang für die Zu- und Abfuhr eines Fluids, beispielsweise einer Probe der zu untersuchenden Moleküle oder Atome, auf. Dadurch kann ein Fluidstrom, beispielsweise ein Gasstrom mit zu untersuchenden Gasmolekülen, durch die Kammer mit dem Füllmaterial geleitet werden. Dadurch ist die Beladung des Füllmaterials mit Probenmolekülen besonders erleichtert.

Die erfindungsgemäße Vorrichtung ist mit Verfahren der Mikrosystemtechnik vergleichsweise leicht herstellbar. Solche Verfahren sind dem Fachmann auf diesem Gebiet gut bekannt und umfassen beispielsweise Strukturierungsverfahren (Lithographieverfahren wie z.B. die Röntgen-Tiefen-Lithographie und UV-Lithographie, Excimerlaser-Strukturierung, mechanische Mikrofertigung, LIGA-Technik), Dünnschichttechniken, Dotierungen, Ätztechniken (Naßchemische Ätzverfahren wie z.B. Tauchätzung und Sprühätzung; Trockenätzverfahren wie die Plasmaätzung, reaktive Ionenätzung (RIE) und die Ionenstrahlätzung) und auch die bereits erwähnte PECVD. Die Kohlenstoff-Nanoröhren und/oder Kohlenstoff-Nanofasern können direkt auf einem geeigneten Substrat bzw. Träger (beispielsweise einer Siliziumscheibe) aufgebracht werden. Sie weisen eine große spezifische Oberfläche auf und adsorbieren beispielsweise Gasmoleküle. Die Eigenschaften der Kohlenstoff-Nanoröhren und/oder Kohlenstoff-Nanofasern können durch Vorsehen entsprechender Abscheideparameter bei der PECVD beeinflußt werden, so daß insbesondere die Oberflächenenergie des Füllmaterials gezielt einstellbar ist.

Die erfindungsgemäße miniaturisierte Vorrichtung besitzt eine sehr geringe Wärmekapazität. Dadurch können Analysensysteme realisiert werden, die für die Probenanreicherung gegebenenfalls mit einem geringen Energiebedarf gekühlt und zur Desorption der Probenmoleküle mit einem geringen Energiebedarf aufgeheizt werden können. Dies ist insbesondere für transportable Analysengeräte wichtig, da es hier auf einen geringen Energiebedarf ankommt.

Bevorzugt ist das Füllmaterial der erfindungsgemäßen Vorrichtung porös. Es ist allerdings auch möglich, beispielsweise in das Innere der Kohlenstoff-Nanoröhren Substanzen (z.B. Metalle) einzubringen, um beispielsweise die Adsorptionseigenschaften gezielt einzustellen.

Die Kammer der erfindungsgemäßen Vorrichtung ist bevorzugt auf einem Träger bzw. Substrat angeordnet. Dieser Träger kann beispielsweise aus Glas oder Metall sein, ist aber bevorzugt eine Siliziumscheibe (Si-Wafer).

Die Kammer kann unmittelbar auf der Oberfläche bzw. einem Teil der Oberfläche des Trägers realisiert sein. Es ist aber auch möglich, die Kammer in eine Oberfläche des Trägers versenkt anzuordnen. Hierzu können beispielsweise in einem Si-Wafer kanalartige Strukturen vorgeformt werden, an deren Grund eine Schicht aus Kohlenstoff-Nanoröhren aufgebaut wird. Auf diese Weise ist eine besonders platzsparende Ausführungsform der erfindungsgemäßen Vorrichtung herstellbar.

In einer Ausführungsform der Erfindung ist eine Heizeinrichtung vorgesehen, die bevorzugt an einer Seite bzw. auf einer Oberfläche des Trägers angeordnet ist, die der Seite bzw. Oberfläche des Trägers mit der Kammer gegenüberliegt. Die Heizeinrichtung kann beispielsweise eine Widerstandsheizung in Dickschicht- oder Dünnschicht-Technologie sein. Die Heizeinrichtung wird vorgesehen, um eine gezielte Freisetzung adsorbierter Moleküle oder Atome zu ermöglichen. Die Heizeinrichtung kann auch in den Träger versenkt angeordnet sein.

In einer weiteren Ausführungsform ist eine Kühleinrichtung vorgesehen. Hierbei kann es sich beispielsweise um ein Peltier-Element handeln. Bevorzugt ist die Kühleinrichtung der Oberfläche des Trägers mit der Kammer gegenüberliegend angeordnet. Besonders bevorzugt ist die Kühleinrichtung in einer Ausnehmung des Trägers angeordnet, so daß die Kühleinrichtung von der Kammer nur durch einen vergleichsweise dünnwandigen Bereich des Trägers getrennt ist. Auf diese Weise ist eine effiziente Kühlung bei gleichzeitig geringem Energiebedarf möglich. Die Kühleinrichtung kann entweder alternativ zur Heizeinrichtung oder auch zusätzlich vorgesehen sein. Eine Kühlung kann vorteilhaft sein, um die Adsorption von Probenmolekülen zu verbessern bzw. zu erleichtern.

Die Kammer der erfindungsgemäßen Vorrichtung ist bevorzugt kanalartig ausgebildet. Weiterhin bevorzugt ist der Ausgang mit dem Eingang einer Trennsäule verbindbar. Dadurch ist es möglich, die erfindungsgemäße Vorrichtung unmittelbar an eine ebenfalls in Mikrosystemtechnik realisierte Trennsäule, wie sie beispielsweise aus der DE 19726000 oder der DE 20301231 bekannt sind, anzuschließen. Dies ist beispielsweise vorteilhaft, um Totvolumina so gering wie möglich zu halten.

Die vorliegende Erfindung betrifft auch ein Verfahren zur Herstellung einer miniaturisierten Vorrichtung zur Speicherung und/oder Anreicherung von Molekülen und/oder Atomen, insbesondere für einen Miniatur-Gaschromotographen. Bei dem Verfahren wird a) mindestens eine Schicht aus einem Füllmaterial, das aus nanoskaligen Kohlenstoff-Nanoröhren, Kohlenstoff-Nanofasern und/oder Fullerenen besteht oder diese enthält, auf einen Träger aufgebracht und b) diese mindestens eine Schicht des Füllmaterials mit mindestens einer Schicht aus amorphem Kohlenstoff abgedeckt, wobei die Schicht aus dem Füllmaterial und die Schicht aus dem amorphen Kohlenstoff so auf dem Träger aufgebracht werden, daß zwischen dem Träger und der Schicht aus dem amorphen Kohlenstoff ein Kanal gebildet wird, der das Füllmaterial enthält und wobei in den Träger Öffnungen eingebracht werden, über die der Kanal an die Außenwelt angeschlossen werden kann.

Mit Hilfe des erfindungsgemäßen Verfahrens läßt sich in besonders vorteilhafter Weise eine miniaturisierte Vorrichtung zur Speicherung und/oder Anreicherung von Molekülen oder Atomen, insbesondere für einen Miniatur-Gaschromotographen, herstellen. Zur Herstellung von miniaturisierten Analysesystemen sind entsprechend angepaßte Verfahren erforderlich, um optimale Resultate zu erzielen und nicht nur eine kompakte Bauweise, sondern auch eine hohe Trennschärfe und Analysegenauigkeit zu ermöglichen. Das erfindungsgemäße Verfahren ist an die Erfordernisse der Mikrosystemtechnik besonders gut angepaßt. Das Füllmaterial besteht aus oder enthält nanoskalige Kohlenstoff-Nanoröhren, Kohlenstoff-Nanofasern und/oder die sogenannten Fullerene. Deren Abmessungen, insbesondere der Durchmesser, liegen im Nanometerbereich (1 nm = 10⁻⁹ m). Das C-60-Fulleren (ein Fulleren mit 60 C-Atomen), das die Form eines geschlossenen Ikosaeders, einem Polyeder mit zwölf pentagonalen und 20 hexagonalen Segmenten, besitzt, weist z.B. einen Durchmesser von etwa 0,7-1 nm auf. Diese Kohlenstoffverbindungen besitzen hohe Speicherkapazität und physikalisch-chemische Beständigkeit.

Das Füllmaterial wird mit einer amorphen Kohlenstoffschicht abgedeckt. Dies ist besonders vorteilhaft, da eine solche Schicht ebenfalls durch plasmagestützte chemische Gasphasenabscheidung durch Einstellen der entsprechenden Verfahrensparameter, die dem Fachmann bekannt sind, hergestellt werden kann. Es ist daher möglich, sowohl die Füllmaterialschicht(en) als auch die Abdeckschicht(en) in einem Arbeitsgang zu fertigen. Bevorzugt werden daher die Schicht(en) aus dem Füllmaterial und die Schicht(en) aus dem amorphen Material mittels PECVD aufgebracht.

Bei dem erfindungsgemäßen Verfahren wird der Bereich auf dem Träger, in dem die Schicht des Füllmaterials aufgebracht wird, bevorzugt durch eine auf dem Träger aufgebrachte Katalysatorschicht aus einem strukturierten Übergangsmetall vorgegeben. Als Träger wird bevorzugt eine Siliziumscheibe eingesetzt. Die Bildung von Kohlenstoff-Nanotubes wird durch Übergangsmetalle, beispielsweise Eisen, Nickel oder Kobalt, katalysiert. Chhowalla et al., 2001, J. Appl. Phys. 90, S. 5308-5317, beschreiben, daß nanoskalige Partikel des Metallkatalysators, die durch Sintern einer Metallkatalysatorschicht hergestellt wurden, auf dem vom Träger abgewandten Ende der wachsenden Nanoröhren "reiten" und dort deren Bildung katalysieren. Durch Einstellen der Partikelgröße des Metallkatalysators kann beispielsweise der Durchmesser der gebildeten Nanoröhren, und damit auch deren physikalischchemische Eigenschaften, gezielt beeinflußt werden. In dem Bereich des Trägers bzw. im dem Bereich der Fläche des Trägers, der/die mit dem Metallkatalysator beschichtet ist, wächst die Schicht aus Kohlenstoff-Nanoröhren bevorzugt auf. Die laterale Ausdehnung des Füllmaterials auf dem Träger kann daher dadurch festgelegt werden, daß in dem gewünschten Bereich die Metallkatalysatorschicht aufgebracht wird. Bei dem Metallkatalysator kann es sich um Eisen, Nickel oder Kobalt handeln. Es kommen aber auch andere Übergangsmetalle in Frage. Unter einem Übergangsmetall wird hierbei ein Element der Gruppen 3-11 nach der IUPAC-Klassifizierung (Elemente mit den Ordnungszahlen 21-30, 39-48, 71-80, 103-112) sowie die Gruppe der Lanthanoiden (Elemente der Ordnungszahlen 57-70) und Actinoiden (Elemente der Ordnungszahlen 89-102) verstanden.

Alternativ ist es aber auch möglich, den Bereich, in dem die Schicht des Füllmaterials aufgebracht wird, mit Hilfe der dem Fachmann auf dem Gebiet der Mikrosystemtechnik bekannten Abhebetechnik (Lift-Off-Technik) zu bestimmen. Hierzu können die Bereiche des Trägers, die kein Füllmaterial aufweisen sollen, mit einer Opferschicht abgedeckt werden. Geeignete Opferschichtmaterialien (z.B. SiO₂) sind dem Fachmann bekannt. Die Füllmaterialschicht/Füllmaterialschichten wird/werden zunächst sowohl in den mit der Opferschicht bedeckten als auch in opferschichtfreien Bereichen des Trägers aufgebracht. Anschließend kann die Opferschicht mit dem darauf befindlichen Füllmaterial beispielsweise mittels chemischer Verfahren entfernt werden, so daß das Füllmaterial nur noch in den opferschichtfreien Bereichen erhalten bleibt.

Bei dem erfindungsgemäßen Verfahren werden die Schicht(en) aus dem Füllmaterial und die Schicht (en) aus dem amorphen Material so auf dem Träger aufgebracht, daß zwischen dem Träger und der Schicht aus dem amorphen Material ein Kanal gebildet wird, der das Füllmaterial enthält. In den Träger werden Öffnungen eingebracht, über die der Kanal an die Außenwelt angeschlossen werden kann, um beispielsweise eine Trennsäule oder ein Probenaufgabesystem anzuschließen.

Die Erfindung betrifft auch die Verwendung einer erfindungsgemäßen miniaturisierten Vorrichtung zur Speicherung und/oder Anreicherung von Molekülen und/oder Atomen zum Zweck der Analyse der Moleküle oder Atome. Dabei handelt es sich bevorzugt um Moleküle bzw. Atome aus einem Fluidstrom, bevorzugt einem Gasstrom.

Die Erfindung wird im folgenden anhand von Ausführungsbeispielen näher erläutert. Es zeigt:
Fig. 1 Eine Ausführungsform der erfindungsgemäßen Vorrichtung.
Fig. 2 Eine weitere Ausführungsform der erfindungsgemäßen Vorrichtung.
Fig. 3 Eine dritte Ausführungsform der erfindungsgemäßen Vorrichtung.

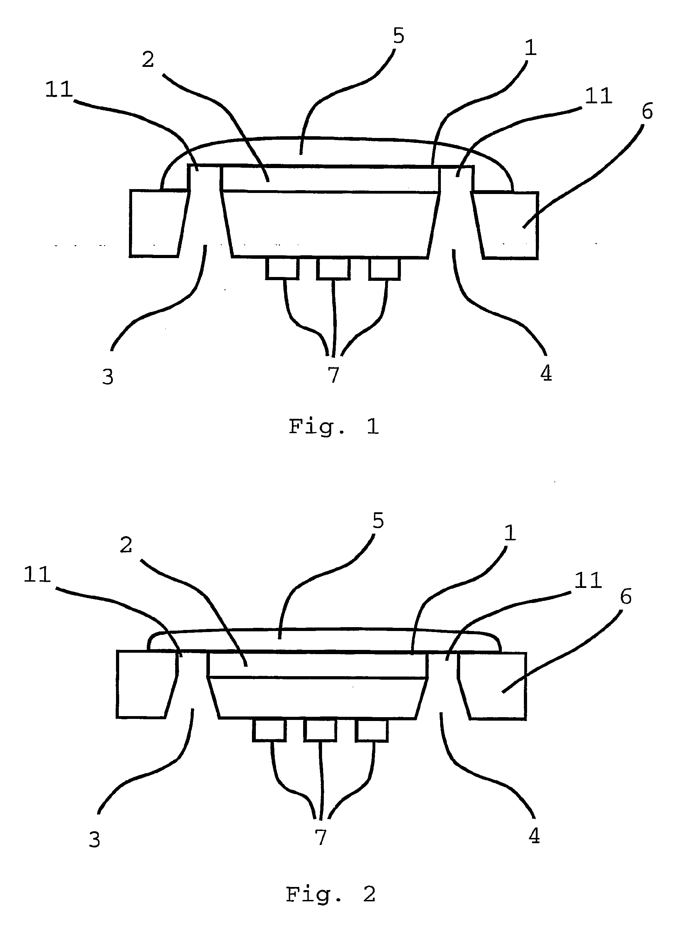

Fig. 1 zeigt eine erfindungsgemäße Vorrichtung zur Speicherung und/oder Anreicherung von Molekülen und/oder Atomen. Die Vorrichtung ist in Mikrosystemtechnik gefertigt. Auf der Oberfläche eines Siliziumwafers 6 ist eine Schicht 2 eines Füllmaterials mit Kohlenstoff-Nanoröhren mittels PECVD aufgebracht. Die Füllmaterialschicht 2 ist mit einer Schicht 5 aus amorphem Kohlenstoff abgedeckt, so daß eine kanalartige Kammer 1 mit dem Füllmaterial 2 gebildet ist. In den Silizium-wafer 6 sind mit bekannten Verfahren der Mikrosystemtechnik zwei Öffnungen, ein Eingang 3 und ein Ausgang 4, eingebracht. Über eine Verbindung 11 stehen die Öffnungen mit der Kammer 1 in Verbindung. Ein Fluid, beispielsweise ein Gasstrom mit zu analysierenden Gasmolekülen, kann durch den Eingang 3, die Kammer 1 mit dem Füllmaterial 2 und den Ausgang 4 die Vorrichtung durchströmen. Zu untersuchende Probenmoleküle werden von dem Füllmaterial 2 adsorbiert und angereichert. An der Seite des Trägers 6, die derjenigen mit der Kammer 1 gegenüberliegt, befindet sich eine Heizeinrichtung 7, beispielsweise Dickschicht- oder Dünnschicht-Widerstandselemente. Mit Hilfe der Heizeinrichtung 7 können vom Füllmaterial 2 adsorbierte Moleküle und/oder Atome wieder desorbiert werden. An den Ausgang 4 kann eine Trennsäule angeschlossen sein.

Der Silizium-Wafer 6 weist beispielsweise Abmessungen von 5 x 3 mm auf, die Kammer 1 mit dem Füllmaterial 2 ist etwa 3 mm lang und wenige Zehntel mm breit und tief.

Zur Herstellung der Vorrichtung wird beispielsweise zunächst eine Opferschicht aus einem organischen Material in den Bereichen des Trägers 6, einem Si-Wafer, aufgebracht, die die Verbindung 11 bilden sollen. Anschließend werden das Füllmaterial 2 und die Schicht 5 aus amorphem Kohlenstoff mittels PECVD aufgebracht. Von der anderen Seite werden der Eingang 3 und Ausgang 4 durch übliche Verfahren der Mikrosystemtechnik in den Si-Wafer 6 strukturiert. Die Opferschicht wird danach entweder verascht oder mit Hilfe von Chemikalien aufgelöst.

Es ist auch möglich, zunächst den Eingang 3 und Ausgang 4 zu strukturieren und dabei eine dünne Si-Schicht (Si-Membran) stehen zu lassen, auf die anschließend die Opferschicht aufgebracht wird. Die Si-Membran und die Opferschicht können dann nach Abscheiden der Schicht des Füllmaterials 2 und der Schicht 5 des amorphen Kohlenstoffs auf chemischem Wege entfernt werden.

Darüber hinaus kann nach Strukturierung des Eingangs 3 und des Ausgangs 4 auch ein Stöpsel aus geeignetem Material so in die entstandenen Öffnungen auf der Seite mit der zukünftigen Kammer 1 eingeführt werden, daß der Bereich, der die spätere Verbindung 11 bildet, nicht von Füllmaterial 2 bedeckt wird. Nach Herstellung der Kammer 1 mit dem Füllmaterial 2 kann der Stöpsel, beispielsweise auf chemischem Wege, wieder entfernt werden.

Fig. 2 zeigt eine erfindungsgemäße Vorrichtung, bei der der Kanal 1 in die Oberfläche des Trägers 6 versenkt ist. Hierzu wurde mit üblichen Verfahren (z.B. Ätztechniken) der Mikrosystemtechnik eine entsprechende Vertiefung in den Täger 6, eine Si-Scheibe, strukturiert. Mit Hilfe plasmagestützter chemischer Gasphasenabscheidung (PECVD) wurde das Füllmaterial 2 in der Vertiefung abgelagert. Auf diese Weise ist eine besonders platzsparende Ausführungsform herstellbar.

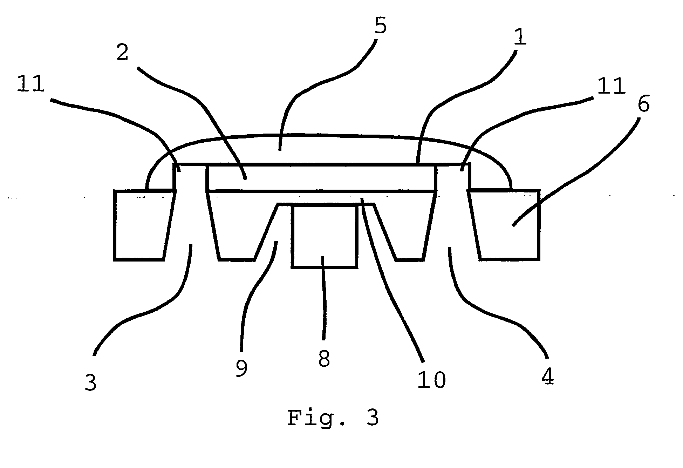

Fig. 3 zeigt eine Ausführungsform, bei der eine Kühleinrichtung 8 vorgesehen ist. Diese ist in einer Ausnehmung 9 angebracht, die in dem Träger 6 vorgesehen ist. Dadurch ist die Kühleinrichtung 8 durch einen vergleichsweise dünnwandigen Bereich 10 von dem Füllmaterial 2 in der Kammer 1 getrennt, so daß eine optimale Übertragung der Kälteenergie möglich ist.

## Patentansprüche

1. Miniaturisierte Vorrichtung zur Speicherung und/oder Anreicherung von Molekülen und/oder Atomen, insbesondere für einen Miniatur-Gaschromotographen, wobei die Vorrichtung eine Kammer (1) aufweist mit einem Füllmaterial (2), das aus Kohlenstoff-Nanoröhren und/oder Kohlenstoff-Nanofasern besteht oder diese enthält, **dadurch gekennzeichnet, daß** das Füllmaterial (2) mit mindestens einer Schicht (5) aus amorphem Kohlenstoff abgedeckt und dadurch die Kammer (1) gebildet ist, und die Kammer (1) einen Eingang (3) und einen Ausgang (4) für die Zu- und Abfuhr einer Probe der Moleküle oder Atome aufweist.

2. Miniaturisierte Vorrichtung nach Anspruch 1, **dadurch gekennzeichnet, daß** das Füllmaterial (2) porös ist.

3. Miniaturisierte Vorrichtung nach einem der Ansprüche 1 oder 2, **dadurch gekennzeichnet, daß** die Kammer (1) auf einem Träger (6) angeordnet ist.

4. Miniaturisierte Vorrichtung nach Anspruch 3, **dadurch gekennzeichnet, daß** die Kammer (1) auf einer Oberfläche des Trägers (6) oder in eine Oberfläche des Trägers (6) versenkt angeordnet ist.

5. Miniaturisierte Vorrichtung nach Anspruch 3 oder 4, **dadurch gekennzeichnet, daß** der Träger (6) eine Siliziumscheibe ist.

6. Miniaturisierte Vorrichtung nach einem der vorhergehenden Ansprüche, **dadurch gekennzeichnet, daß** eine Heizeinrichtung (7) vorhanden ist.

7. Miniaturisierte Vorrichtung nach Anspruch 6, **dadurch gekennzeichnet, daß** die Heizeinrichtung (7) der Oberfläche des Trägers (6) mit der Kammer (1) gegenüberliegend angeordnet ist.

8. Miniaturisierte Vorrichtung nach einem der Ansprüche 6 oder 7, **dadurch gekennzeichnet, daß** die Heizeinrichtung (7) eine Widerstandsheizung in Dickschicht- oder Dünnschicht-Technologie ist.

9. Miniaturisierte Vorrichtung nach einem der vorhergehenden Ansprüche, **dadurch gekennzeichnet, daß** eine Kühleinrichtung (8) vorhanden ist.

10. Miniaturisierte Vorrichtung nach Anspruch 9, **dadurch gekennzeichnet, daß** die Kühleinrichtung (8) ein Peltier-Element ist.

11. Miniaturisierte Vorrichtung nach Anspruch 9 oder 10, **dadurch gekennzeichnet, daß** die Kühleinrichtung (8) der Oberfläche des Trägers (6) mit der Kammer (1) gegenüberliegend angeordnet ist.

12. Miniaturisierte Vorrichtung nach Anspruch 11, **dadurch gekennzeichnet, daß** die Kühleinrichtung (8) in einer Ausnehmung (9) des Trägers (6) angeordnet ist.

13. Miniaturisierte Vorrichtung nach einem der vorhergehenden Ansprüche, **dadurch gekennzeichnet, daß** die Kammer (1) kanalartig ausgebildet ist.

14. Verwendung einer miniaturisierten Vorrichtung nach einem der vorhergehenden Ansprüche, **dadurch gekennzeichnet, daß** der Ausgang (4) mit dem Eingang einer Trennsäule (12) verbunden wird.

15. Verfahren zur Herstellung einer miniaturisierten Vorrichtung zur Speicherung und/oder Anreicherung von Molekülen und/oder Atomen, insbesondere für einen Miniatur-Gaschromotographen,
wobei mindestens eine Schicht aus einem Füllmaterial, das aus nanoskaligen Kohlenstoff-Nanoröhren, Kohlenstoff-Nanofasern und/oder Fullerenen besteht oder diese enthält, auf einen Träger aufgebracht wird, **dadurch gekennzeichnet, daß** die mindestens eine Schicht des Füllmaterials mit mindestens einer Schicht aus amorphem Kohlenstoff abgedeckt wird, und die Schicht aus dem Füllmaterial und die Schicht aus dem amorphen Kohlenstoff so auf dem Träger aufgebracht werden, daß zwischen dem Träger und der Schicht aus dem amorphen Kohlenstoff ein Kanal gebildet wird, der das Füllmaterial enthält und wobei in den Träger Öffnungen eingebracht werden, über die der Kanal an die Außenwelt angeschlossen werden kann.

16. Verfahren nach Anspruch 15, **dadurch gekennzeichnet, daß** die Schicht aus dem Füllmaterial und die Schicht aus dem amorphen Kohlenstoff durch plasmagestützte chemische Gasphasenabscheidung (Plasma Enhanced Chemical Vapor Deposition, PECVD) aufgebracht wird.

17. Verfahren nach einem der Ansprüche 15 oder 16, **dadurch gekennzeichnet, daß** der Bereich auf dem Träger, in dem die Schicht des Füllmaterials aufgebracht wird, durch eine auf dem Träger aufgebrachte Katalysatorschicht aus einem strukturierten Übergangsmetall vorgegeben wird.

18. Verfahren nach Anspruch 17, **dadurch gekennzeichnet, daß** als Übergangsmetall Eisen, Nickel oder Kobalt verwendet wird.

19. Verfahren nach einem der Ansprüche 15 bis 18, **dadurch gekennzeichnet, daß** als Träger eine Siliziumscheibe verwendet wird.

20. Verwendung einer miniaturisierten Vorrichtung nach einem der Ansprüche 1 bis 13 zur Speicherung und/oder Anreicherung von Molekülen und/oder Atomen zum Zweck der Analyse der Moleküle oder Atome.

21. Verwendung nach Anspruch 20, **dadurch gekennzeichnet, daß** Moleküle oder Atome aus einem Fluidstrom, bevorzugt einem Gasstrom, gespeichert und/oder angereichert werden.

## Claims

1. Miniaturised device for storing and/or enriching molecules and/or atoms, in particular for a miniature gas chromatograph, the device comprising a chamber (1) with a filler material (2) which consists of carbon nanotubes and/or carbon nanofibres or contains these, **characterised in that** the filler material (2) is covered with at least one layer (5) of amorphous carbon and the chamber (1) is thereby formed and the chamber (1) comprises an inlet (3) and an outlet (4) for supplying and discharging a sample of the molecules or atoms.

2. Miniaturised device according to Claim 1, **characterised in that** the filler material (2) is porous.

3. Miniaturised device according to either of Claims 1 and 2, **characterised in that** the chamber (1) is arranged on a support (6).

4. Miniaturised device according to Claim 3, **characterised in that** chamber (1) is arranged on a surface of the support (6) or is arranged sunk into a surface of the support (6).

5. Miniaturised device according to Claim 3 or 4, **characterised in that** the support (6) is a silicon wafer.

6. Miniaturised device according to any one of the preceding claims, **characterised in that** a heating instrument (7) is provided.

7. Miniaturised device according to Claim 6, **characterised in that** the heating instrument (7) is arranged on the opposite side from the surface of the support (6) comprising the chamber (1).

8. Miniaturised device according to either of Claims 6 and 7, **characterised in that** the heating instrument (7) is a heating resistor in thick-film or thin-film technology.

9. Miniaturised device according to any one of the preceding claims, **characterised in that** a cooling instrument (8) is provided.

10. Miniaturised device according to Claim 9, **characterised in that** the cooling instrument (8) is a Peltier element.

11. Miniaturised device according to Claim 9 or 10, **characterised in that** the cooling instrument (8) is arranged on the opposite side from the surface of the support (6) comprising the chamber (1).

12. Miniaturised device according to Claim 11, **characterised in that** the cooling instrument (8) is arranged in a recess (9) of the support (6).

13. Miniaturised device according to any one of the preceding claims, **characterised in that** the chamber (1) is configured in the form of a channel.

14. Use of a miniaturised device according to any one of the preceding claims, **characterised in that** the outlet (4) is connected to the inlet of a separating column (12).

15. Method for producing a miniaturised device for storing and/or enriching molecules and/or atoms, in particular for a miniature gas chromatograph, wherein at least one layer of a filler material, which consists of nanoscale carbon nanotubes, carbon nanofibres and/or fullerenes or contains these, is applied onto a support, **characterised in that** the at least one layer of the filler material is covered with at least one layer of amorphous carbon and the filler material layer and the amorphous carbon layer are applied on the support so that a channel, which contains the filler material, is formed between the support and the amorphous carbon layer, and wherein openings, via which the channel can be connected to the outside world, are formed in the support.

16. Method according to Claim 15, **characterised in that** the filler material layer and the amorphous carbon layer are applied by plasma enhanced chemical vapour deposition (PECVD).

17. Method according to either of Claims 15 and 16, **characterised in that** the region on the support, in which the filler material layer is applied, is defined by a catalyst layer of a structured transition metal which is applied on the support.

18. Method according to Claim 17, **characterised in that** iron, nickel or cobalt is used as the transition metal.

19. Method according to any one of Claims 15 to 18, **characterised in that** a silicon wafer is used as the support.

20. Use of a miniaturised device according to any one of Claims 1 to 13 for storing and/or enriching molecules and/or atoms for the purpose of analysing the molecules or atoms.

21. Use according to Claim 20, **characterised in that** molecules or atoms from a fluid flow, preferably a gas flow, are stored and/or enriched.

## Revendications

1. Dispositif miniaturisé pour le stockage et/ou l'enrichissement de molécules et/ou d'atomes, en particulier pour un chromatographe gazeux miniature, le dispositif présentant une chambre (1) avec un matériau de remplissage (2), lequel est constitué de nanotuyaux en carbone et/ou de nanofibres en carbone ou contient ceux-ci, **caractérisé en ce que** le matériau de remplissage (2) est recouvert avec au moins une couche (5) d'un carbone amorphe et la chambre (1) est par-là formée, et la chambre (1) présente une entrée (3) et une sortie (4) pour l'introduction et l'évacuation d'un échantillon des molécules ou des atomes.

2. Dispositif miniaturisé selon la revendication 1, **caractérisé en ce que** le matériau de remplissage (2) est poreux.

3. Dispositif miniaturisé selon l'une quelconque des revendications 1 ou 2, **caractérisé en ce que** la chambre (1) est disposée sur un support (6).

4. Dispositif miniaturisé selon la revendication 3, **caractérisé en ce que** la chambre (1) est disposée sur une surface du support (6) ou est encastrée dans une surface du support (6).

5. Dispositif miniaturisé selon la revendication 3 ou 4, **caractérisé en ce que** le support (6) est une plaque de silicium.

6. Dispositif miniaturisé selon l'une quelconque des revendications précédentes, **caractérisé en ce qu'**une installation de chauffage (7) est présente.

7. Dispositif miniaturisé selon la revendication 6, **caractérisé en ce que** l'installation de chauffage (7) est disposée à l'opposé de la surface du support (6) avec la chambre (1).

8. Dispositif miniaturisé selon l'une quelconque des revendications 6 ou 7, **caractérisé en ce que** l'installation de chauffage (7) est un chauffage à résistance dans une technologie de couche épaisse ou de couche mince.

9. Dispositif miniaturisé selon l'une quelconque des revendications précédentes, **caractérisé en ce qu'**une installation de refroidissement (8) est présente.

10. Dispositif miniaturisé selon la revendication 9, **caractérisé en ce que** l'installation de refroidissement (8) est un élément Peltier.

11. Dispositif miniaturisé selon la revendication 9 ou 10, **caractérisé en ce que** l'installation de refroidissement (8) est disposée à l'opposé de la surface du support (6) avec la chambre (1).

12. Dispositif miniaturisé selon la revendication 11, **caractérisé en ce que** l'installation de refroidissement (8) est disposée dans un creux (9) du support (6).

13. Dispositif miniaturisé selon l'une quelconque des revendications précédentes, **caractérisé en ce que** la chambre (1) est formée à la manière d'un canal.

14. Utilisation d'un dispositif miniaturisé selon l'une quelconque des revendications précédentes, **caractérisée en ce que** la sortie (4) est liée à l'entrée d'une colonne de séparation (12).

15. Procédé pour la préparation d'un dispositif miniaturisé pour le stockage et/ou l'enrichissement de molécules et/ou d'atomes, en particulier pour un chromatographe gazeux miniature, au moins une couche constituée d'un matériau de remplissage qui est constitué de nanotuyaux en carbone, de nanofibres en carbone et/ou de fullérènes de l'échelle du nanomètre ou qui contient ceux-ci, étant appliquée sur un support, **caractérisé en ce que** la au moins une couche du matériau de remplissage est recouverte avec au moins une couche constituée d'un carbone amorphe, et la couche constituée du matériau de remplissage et la couche constituée du carbone amorphe étant appliquées sur le support de telle sorte qu'entre le support et la couche constituée du carbone amorphe est formé un canal, qui contient le matériau de remplissage et des ouvertures, par l'intermédiaire desquelles le canal peut être raccordé au monde extérieur, étant introduites dans le support.

16. Procédé selon la revendication 15, **caractérisé en ce que** la couche constituée du matériau de remplissage et la couche constituée du carbone amorphe sont appliquées par l'intermédiaire d'un dépôt en phase gazeuse chimique activé au plasma (Plasma Enhanced Chemical Vapor Déposition, PECVD).

17. Procédé selon l'une quelconque des revendications 15 ou 16, **caractérisé en ce que** le domaine sur le support dans lequel la couche du matériau de remplissage est appliquée, est prédéfini par une couche de catalyseur appliquée sur le support constituée d'un métal de transition structuré.

18. Procédé selon la revendication 17, **caractérisé en ce que** l'on utilise comme métal de transition du fer, du nickel ou du cobalt.

19. Procédé selon l'une quelconque des revendications 15 à 18, **caractérisé en ce que** l'on utilise comme support une plaque de silicium.

20. Utilisation d'un dispositif miniaturisé selon l'une quelconque des revendications 1 à 13 pour le stockage et/ou l'enrichissement de molécules et/ou d'atomes à des fins d'analyse des molécules ou des atomes.

21. Utilisation selon la revendication 20, **caractérisée en ce que** l'on stocke et/ou on enrichit des molécules ou des atomes provenant d'un courant de fluide, de préférence d'un courant gazeux.
